# EUROPEAN PATENT SPECIFICATION

(11) **EP 1 252 219 B1**
(45) Date of publication and mention of the grant of the patent: **16.08.2006**
(21) Application number: 00992360.8
(22) Date of filing: 30.11.2000
(51) Int. Cl.: C08G 63/688, C11D 1/60, D06C 29/00

(54) **PROCESS FOR MAKING SULFONATED POLYESTER COMPOUNDS**
VERFAHREN ZUR HERSTELLUNG VON SULFONIERTEN POLYESTERN
PROCEDE DE PRODUCTION DE COMPOSES DE POLYESTER SULFONE

(30) Priority: 01.12.1999 US 168420 P
(43) Date of publication of application: 30.10.2002
(73) Proprietor: RHODIA INC., Cranbury, New Jersey 08512 (US)
(72) Inventor: WO, Shiming, Dacula, GA 30019 (US)
(74) Representative: Campbell, Neil Boyd
(86) International application number: PCT/US2000/042408
(87) International publication number: WO 2001/040349

(56) References cited:
- EP-A- 0 548 705
- US-A- 4 427 557
- US-A- 4 554 328
- US-A- 5 820 982

## Description

The present invention is directed to a process of producing sulfonated polyester compounds suitable for use as a soil releasing agent and/ortextile sizing agent in which a sulfonated acid or ester is reacted with a hydroxy-containing compound to form a sulfonated hydroxy terminated esterwhich then undergoes a transesterification reaction with a poly(ethylene) terephthate based polyester followed by polycondensation to form the desired sulfonated polyester compound. The present invention provides lower cost, reduced cycle times and improved yields over conventional processes for the production of sulfonated polyester compounds.

Sulfonated polyester compounds are known for removing soil and stains from a variety of substrates including filaments, fibers, fabrics, films and the like. Low molecular weight sulfonated polyester compounds are typically employed as soil release agents in laundry detergents while higher molecularweight sulfonated polyester compounds have been used for textile sizing.

U.S. Patent No. 3,962,152 discloses a detergent composition containing polymers as soil release agents which are obtained by reacting dimethyl terephthalate with polyethylene glycol.

U.S. Patent Nos. 4,863,619; 4,925,577 and 5,041,230 generally disclose methods of improving the processability of soil release polymers.

U.S. Patent No. 4,999,128 discloses copolymers of poly(ethylene terephthalate/ethylene isophthalate) and related copolymers which are produced by reacting the esters with polyethylene glycol.

U.S. Patent No. 5,142,020 discloses soil release promoters and detergents which are obtained by the polymerization of monomers such as dicarboxylic acid/ester/anhydride, dihydric alcohols and polyethylene glycols.

Sulfonated polyester compounds have received increased attention as effective soil release agents. For example, U.S. Patent No. 3,557,039 discloses a stable aqueous dispersion comprising water and a water insoluble crystallizable block or graph polymeric compound which contains linear polyethylene terephthalate segments having sufficient ethylene terephthalate units to confer crystallinity to the compound. These polymers are prepared by reacting monomers which include dimethyl sodium sulfoisophthalate.

U.S. Patent No. 4,427,557 discloses sulfonated copolymers used for preparing anionic textile treating compositions in which the polymerizable monomers include dimethyl sulfoisophthalate.

U.S. Patent No. 4,702,857 discloses sulfonated copolymers used as soil release agents in detergent formulations in which the copolymers are obtained by polymerizing monomers such as dimethyl terephthalate, dimethyl sulfoisophthalate, polyethylene glycol and polyethylene glycol monoether.

U.S. Patent No. 5,599,782 also discloses sulfonated polyester compounds useful as soil release agents. Polymerizable monomers which are mentioned in the reference include m-sodiosulfobenzoic acid, dimethylsodiosulfoisophthalate, dimethyl terephthalate, terephthalic acid and ethylene glycol.

U.S. Patent No. 5,728,671 discloses sulfonated polyester compounds useful as soil release agents having whitening properties.

U.S. Patent No. 5,786,318 discloses polymerizing such monomers as sulfonated aromatic dicarboxylic acids to produce soil release polymers for detergent compositions. Other soil release polymers containing sulfonated polymers are disclosed in U.S. Patent Nos. 5,789,365; 5,789,366; and 5,789,367.

The market for polyester compounds for use as soil releasing agents and/or textile sizing agents and particularly sulfonated polyester compounds for this purpose has increased significantly in recent years. However, increased demand has spurred efforts to improve production capability of the desired sulfonated polyestercompounds.

Traditional methods of producing sulfonated polyester compounds for use as soil releasing agents and/or textile sizing agents are problematical for reasons which include expensive starting materials, lengthy process cycle (i.e. the time it takes from the initial reaction to the production of a finished product) and low yields of the desired product or relative low reactor throughput. By way of example, the production of a sulfonated polyester compound through a transesterification reaction of dimethyl terephthalic and dimethyl-5-sulfoisophthalate with excess ethylene glycol, followed by esterification with terephthalate acid and then polycondensation undergoes a typical cycle time of about 38.5 hours for processing a 15 ton batch of polyester. Since the reaction produces 35% of distillate, the long cycle time and low yield or reactor throughput makes it very difficult to meet the requirements of the growing market demand for such sulfonated polyester compounds.

The present invention is directed to a process for the production of sulfonated polyester compounds in which reaction yields and cycle time are significantly improved over conventional processes for the production of the same or similar compounds. The present method is generally directed to the production of a sulfonated polyester compound suitable for use as a soil releasing agent and/or textile sizing agent in which a sulfonated acid or corresponding alkyl ester is reacted with a hydroxy-containing compound to produce a sulfonated ester intermediate compound which is then reacted with a polyester compound selected to afford the final polyester compound with a desired molecular weight.

In a particular aspect of the present invention, there is provided a method of producing a sulfonated polyester compound suitable for use as a soil releasing agent and/or textile sizing agent comprising:
a) reacting at least one compound of Formula (I)

   XSO₃ - R - (COOY)n (I)

   wherein
   X is a cation,
   R is an aryl group,
   Y is selected from the group consisting of hydrogen and an alkyl group, and
   n is a positive integer from 1 to 4
   with at least one compound of Formula (II)

   R₁ - (OH)m (II)

   wherein R₁ is selected from the group consisting of an alkyl group, a cycloalkyl group and an aryl group, which may be substituted with an alkyl group or an aryl group, and m is a positive integer and optionally with a compound of Formula (III)

   R₂ - (COOZ)p (III)

   wherein R₂ is selected from the group consisting of an alkyl group and an aryl group, Z is selected from the group consisting of hydrogen and an alkyl group, and p is a positive integer, and optionally with a compound of Formula (IV) 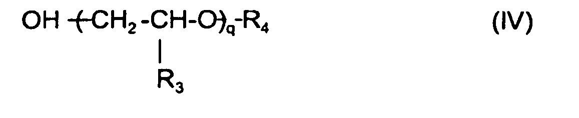 wherein R₃ and R₄ are each independently selected from the group consisting of hydrogen and an alkyl group, and q is a positive integer to produce at least one ester compound intermediate, and b) reacting the resulting ester compound intermediate with a homo - or co-poly (ethylene terephthalate) as a sole reactant to produce the sulfonated polyester, and
c) discharging said sulfonated polyester compound.

The method of producing a sulfonated polyester compound in accordance with the present invention for use as a soil releasing agent and/or textile sizing agent begins with the reaction of at least one compound of Formula (I)

XSO₃ - R - (COOY)n (I)

wherein X is a cation, R is an aryl group which may be substituted with an alkyl group or an aryl group, Y is selected from the group consisting of hydrogen and an alkyl group and n is a positive integer from 1 to 4 . The cations available for X include, for example, sodium, lithium, potassium, NH₄ and tetrabutylphosphonium. Sodium is the preferred cation for the compound of Formula (I). R is an aryl group and includes, for example, phenyl, and naphthyl.

The starting sulfonated compound may be in the form of an acid wherein Y is hydrogen or in the form of an alkyl ester. Preferred alkyl groups are methyl, ethyl, propyl and butyl with methyl being the preferred alkyl group. The number of acid or ester groups is from 1 to 4, preferably 1 or 2. The most preferred number of acid or ester groups is 2.

Examples of suitable compounds of Formula (I) include dimethyl-5-sodiosulfoterephthalate, 5-sodiosulfoterephthalic acid, 5-lithioisophthalic acid, 3-sodiosulfobenzoic acid, and 4-sodiosulfodiphenyl-4, 4'-dicarboxylic acid. The preferred compounds of Formula (I) are sodiosulfoisophthalic acid and 3-sodiosulfobenzoic acid.

The compound of Formula (I) is reacted with a hydroxy-containing compound of Formula (II) R₁ - (OH)m. The hydroxy-containing compound can be selected from monols, diols and polyols. R₁ is selected from the group consisting of unsubstituted alkyl, cycloalkyl, and aryl groups which may be substituted with an alkyl group and an aryl group. Preferred alkyl groups are those having 1-8 carbon atoms most preferably methyl, ethyl, propyl, and butyl. Preferred cycloalkyl groups are those having 5 to 8 carbon atoms such as cyclohexanyl. Preferred aryl groups for R₁ include phenyl and naphthyl. M is preferably in the range of from 1 to 4, most preferably 2. Preferred compounds of Formula (II) include ethylene glycol, 1, 2- propylene glycol, 1, 3-propanediol, neopentyl glycol, glycerol, 1, 2 butylene glycol, 1, 4-butanediol, 2, 2-dimethyl-1, 3-propanediol, 1, 6-hexanediol and 1, 4-cyclohexanedimethanol.

In addition to compounds of Formulas (I) and (II), the reaction can also be conducted in the presence of a compound of Formula (III).

R₂ - (COOZ)p (III)

depending on the application of the final polymer. R₂ is selected from the group consisting of an alkyl group and an aryl group, which may be substituted with an alkyl group or an aryl group. Z is selected from the group consisting of hydrogen and an alkyl group and p is a positive integer. Preferred alkyl groups are those having 1-12 carbon atoms. Preferred alkyl groups for Z are those having 1-4 carbon atoms. Preferred values for P are 1 and 2. Exemplary compounds where R₂ is an alkyl group include adipic, succinic, sebacic, azelaic, glutaric and suberic acids and their corresponding alkyl esters. Exemplary compounds where R₂ is an aryl group include terephthalic, isophthalic, orthophthalic, 1, 2-naphthalene dicarboxylic, 1, 4-naphthalenedicarboxylic, 1, 5-naphthalenedicarboxylic, 1, 6-naphthalenedicarboxylic, 1 ,7-naphthalenedecarboxylic, 1 ,8-naphthalenedicarboxylic, 2,3-naphthalenedicarboxylic, 2, 6-naphthalenedicarboxylic, 2, 7-naphthalenedicarboxylic acids and their corresponding alkyl esters.

A compound of Formula (IV) may also be used as an optional starting material 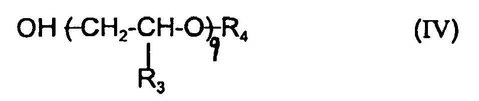 wherein R₃ and R₄ are each independently selected from the group consisting of hydrogen and an alkyl group and q is a positive integer.

Preferred alkyl groups for R₃ are those having 1-4 carbon atoms. Preferred alkyl groups for R₄ are those having 1-12 carbon atoms especially methyl and lauryl. Preferred values for q are 2-20. Exemplary compounds- of the optional material of Formula (IV) include polyethylene glycol, polypropylene glycol and block copolymers of polyethylene glycol and polypropylene glycol and their corresponding alkyl monoethers. The compounds of Formula (IV) preferably have a molecular weight of no more than about 1,000.

The reaction of the compounds of Formulas (I) and (II) optionally in the presence of at least one compound of Formulas (III) and (IV) is typically conducted at a temperature of from about 120 to 280°C, preferably from about 130 to 190°C. The reaction is typically carried out in the presence of a catalyst capable of catalyzing esterfication and/or transesterification reactions, such as, for example titanium (IV) (triethanolaminato) isopropoxide, titanium (IV) propoxide, titanium (IV) butoxide, manganese acetate, antimony trioxide, hydrated monobutyltin oxide and magnesium oxide. Other suitable catalysts would be well known to these skilled in the art. The preferred catalyst is titanium (IV) (triethanolaminato) isopropoxide.

The reaction of the compounds of Formulas (I) and (II) and optionally at least one compound of Formulas (III) and (IV) produces at least one ester compound intermediate. The ester compound intermediate is then reacted continuously or intermittently with a homo-or co-poly (ethylene terephthalate) to produce the desired sulfonated polyester compound. This reaction is typically conducted at a temperature of from about 150 to 280°C, preferably form about 180 to 260°C. Depending on the desired molecular weight, a vacuum of from about 600 to 0.5 mmHg (about 7 9993, 2 to 66,66 Pa) can be applied after all of the poly (ethylene terephthalate) has melted.

The preferred poly (ethylene terephthalate) compounds for reacting with the ester compound intermediate is a copolymer of polyethylene terephthalate and comonomers selected from the group consisting of isophthalate, diethylene glycol, propylene glycol, and 1, 4-cyclohexanedimethanol. The resulting reaction produces a sulfonated polyester compound wherein the position and number of sulfonated groups are determined by the suitable selection of the starting materials. By selecting a compound of Formula (I) wherein n is 1, at least some of the sulfonated groups will appear as an end group in the polyester chain. By employing at least one compound of Formula (I) wherein n is greater than 1, at least some of the sulfonated groups will appear intermittently in the polyester compound and not as an end group.

The following examples are illustrative of the embodiments of the invention and are not intended to limit the invention as encompassed by the claims forming part of the application.

### EXAMPLES

### Example 1:

To a 1 liter resin reactor equipped with a mechanical stirrer, a packed refluxing column, a nitrogen inlet, and a heat source was added 350 g of ethylene glycol, 200 g of 5-sodiosulfoisophthalic acid, 20 g of isophthalic acid and 1.2 g of titanium (IV) (triethanolaminato) isopropoxide. The mixture was heated to 230° C and held at that temperature for 30 minutes. 380 g of poly(ethylene terephthalate) was added and the mixture was heated to 230° C. Another 440 g of poly(ethylene terephthalate) was added and the mixture was heated to 260° C. When the batch temperature had reached 260° C, a vacuum was applied to 200 mmHg (26664,4 Pa) and the polymer was held for 20 minutes and then cooled to 160° C for discharge. The resulting polymer exhibited excellent soil releasing properties.

### Example 2:

The procedure and materials as set forth in Example 1 were repeated except that a mixture of 250 g of diethylene glycol and 50 g of ethylene glycol was used as a starting material in place of 350 g of ethylene glycol. The resulting polymer exhibited excellent soil releasing properties.

### Example 3:

The procedure and materials as set forth in Example 1 were repeated except that 5-lithiosulfoisophthalic acid was used to replace 5-sodiosulfoisophthalic acid. The resulting polymer exhibited excellent soil releasing properties.

### Example 4:

The procedure and materials as set forth in Example 1 were repeated except that the starting materials were heated to 185°C and held for 30 minutes before the polyethylene terephthalate was added.

### Example 5:

A mixture of 201 g of 5-sodiosulfoisophthalic acid, 300 g ethylene glycol and 150g of polyethylene glycol having a molecular weight of 200 was heated to 185°C and held for 30 minutes. 380g of a copolymer of poly (ethylene terephthalate - ethylene isophthalate) in a 60:40 weight ratio was added to the mixture and the resulting mixture was heated to 235°C. Thereafter 440g of the same copolymer was added to the mixture and heated to 250°C under atmospheric pressure for two hours followed by cooling to 160°C for discharging. The resulting polymer exhibited excellent soil releasing properties.

### Example 6:

A mixture of 140g of propylene glycol, 350g of ethylene glycol, 175g of 3-sodiosulfobenzoic acid and 210g of 5-sodioisophthalic acid was heated to 230°C and held for 30 minutes. 380g of poly(ethylene terephthalate) was added to the mixture which was then heated to 230°C. Thereafter 440g of the same copolymer was added to the mixture and heated to 250°C under atmospheric pressure for two hours followed by cooling to 160°C for discharging. The resulting polymer exhibited excellent soil releasing properties.

### Example 7:

A mixture of 140 g of propylene glycol, 350g of ethylene glycol, 175g of 3sodiosulfobenzoic acid and 210g of 5-sodioisophthalic acid was heated to 230°C and held for 30 minutes. 380g of poly (ethylene terephthalate) was added to the mixture which was then heated to 230°C. Thereafter an additional 440g of poly (ethylene terephthalate) was added and the mixture heated to 250°C. When the temperature reached 250°C, a vacuum was applied and the batch was held at 5mmHg for five hours before discharge. The resulting polymer exhibited excellent textile sizing properties.

### Example 8:

450g of ethylene glycol, 160g of isophthalic acid, 171g of 5-sodiosulfoisophthalic acid, 0.08g of antimony trioxide and 0.6 of titanium propoxide were combined and heated to 230°C and held for 30 minutes. 360g of poly (ethylene terephthalate) was added to the mixture which was heated to 240°C. Thereafter an additional 380g of poly(ethylene terephthalate) was added to the mixture followed by heating to 250°C. When the temperature reached 250°C a vacuum was applied and the batch was held at 5mmHg for five hours before discharge. The resulting polymer exhibited excellent textile sizing properties.

### Example 9:

400g of ethylene glycol, 171 g of sodiosulfoisophthalic acid, 0.08g of antimony trioxide and 0.6g titanium (IV) (triethanolaminato) isopropoxide was heated to 185°C and held for 30 minutes. 400g of a poly(ethylene terephthalate) containing 20 molar % of ethylene isophthalate was added and the batch was heated to 240°C. Thereafter, an additional 510g of the same poly (ethylene terephthalate) was added to the mixture followed by heating to 250°C. When the temperature reached 250°Cm a 5mmHg vacuum was applied for three hours followed by discharge of the polymer. The resulting polymer exhibited excellent textile sizing properties.

## Claims

1. A method of producing a sulfonated polyester compound suitable for use as a soil releasing agent or a textile sizing agent comprising:
a) reacting at least one compound of Formula (I)
XSO₃ - R - (COOY)n (I)
wherein
X is a cation,
R is an aryl group which may be substituted with an alkyl group or an aryl group,
Y is selected from the group consisting of hydrogen and an alkyl group, and
n is a positive integer from 1 to 4
with at least one compound of Formula (II)
R₁- (OH)ₘ (II)
wherein R₁ is selected from the group consisting of an alkyl group, a cycloalkyl group and an aryl group which groups may be substituted with an alkyl group or an aryl group, and m is a positive integer to produce at least one ester compound intermediate;
b) reacting the ester compound intermediate with a homo-or co-poly (ethylene terephthalate) as a sole reactant to produce the sulfonated polyester compound; and
c) discharging said sulfonated polyester compound.

2. The method of claim 1 wherein X is selected from the group consisting of sodium, lithium, potassium, NH₄ and tetrabutylphosphoniurn.

3. The method of claim 2 wherein X is sodium.

4. The method of claim 1 to 3 wherein R is phenyl or naphthyl.

5. The method of claim 1 to 4 wherein Y is an alkyl group from the group consisting of methyl, ethyl, propyl and butyl or Y is hydrogen.

6. The method of claim 5 wherein Y is methyl.

7. The method of claim 1 to 6 wherein n is 2.

8. The method of claim 1 wherein the compound of Formula (.I) selected from the group consisting of dimethyl-5-spdiosulfoterephthalate, 5-sodiosulfoisophthalic acid, 5-lithiosulfoisophthalic acid, 3-sodiosulfo-benzoic acid, 4-sodiosulfo-2,2-naphthalenedicarboxylic acid, and 4-sodiosulfodiphenyl-4,4'-dicarbo:cylic acid.

9. The of claim 1 to 8 wherein R₁ is an alkyl group having 1-8 carbon atoms, a cycloalkyl group having 5 to 8 carbon atoms or phenyl or naphthyl.

10. The method of claim 9 wherein R₁ is an alkyl group selected from the group consisting of methyl, ethyl, propyl and butyl.

11. The method of claim 1 to 10 wherein m is from 1 to 4.

12. The method of claim 11 wherein m is 2.

13. The metllod of claim 1 to 8 wherein the compound of Formula (II) is selected from the group consisting of ethylene glycol, 1,2-propylene glycol, 1,3-propanediol, neopentyl glycol, glycerol, 1,2 butylene glycol, 1,4-hutanedio 2,2-dimethyl-1, 3-propanediol, 1,6-hexanedio and 1,4-cyclohexanedimethanol.

14. The method of claim 1 to 13 wherein the reaction of step (a) is conducted at a temperature of from about 130 to 190°C.

15. The method of claim 14 further comprising conducting the reaction of step (a) in the presence of an esterification or transesterification catalyst.

16. The method of claim 1 to 15 wherein the reaction of step (b) is conducted at a temperature of from about 180 to 260°C.

17. The method of claim 1 to 16 further comprising conducting the reaction in a vacuum of from about 600 to 0.5 mmHg (about 79993,2 to 66,66 Pa).

18. The method of claim 1 to 17 wherein the homo or co-poly(ethylene terephthalate) is a co-polymer of poly (ethylene terephthalate) with a comonomer selected from the group consisting of isophthalate, diethylene glycol, propylene glycol, and 1,4-cyclohexanedimethanol.

19. The method of claim 1 to 18 wherein step (a) further comprises reacting the compounds of Formulas (I) and (II) in the presence of at least one compound of Formula (III)
R₂ - (COOZ)p (III)
wherein R₂ is selected from the group consisting of an alkyl group and an aryl group which may be substituted with an alkyl group or an aryl group, Z is selected from the group consisting of hydrogen and an alkyl group and p is a positive integer.

20. The method of claim 19 wherein R₂ is an alkyl group having 1-12 carbon atoms or phenyl or naphthyl.

21. The method of claim 19 or 20 wherein Z is an alkyl group having 1-4 carbon atoms.

22. The method of claim 19 to 21 wherein p is 1 or 2.

23. The method of claim 19 wherein the compound of Formula (III) is selected from the group consisting of terephthalic, isophthalic, orthophthalic, 1,2-naphthalenedicarboxylic, 1,4-naphthalenedicarboxylic, 1,5-naphthalenedicarboxylic, 1,6-naphthalenedicarboxylic, 1,7-naphthaleio.edecarboxylic, 1,6-naphthalenedicarboxylic 2,3-naphthalenedicarboxylic, 2,6-naphthalenedicarboxylic 2,7-naphthalenedicarboxylic acids and their corresponding alkyl esters.

24. The method of claim 1 to 23 wherein step (a) further comprises reacting the compounds of Formula (I) and (II) in the presence of at least one compound of Formula (IV) 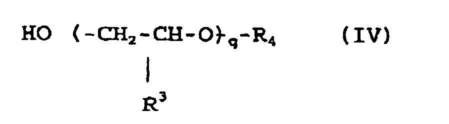 wherein R₃ and R₄ are each independently selected from the group consisting of hydrogen and an alkyl group and q is a positive integer.

25. The method of claim 24 wherein R₃ is an alkyl group having 1-4 carbon atoms.

26. The method of claim 24 or 25 wherein R₄ is an alkyl group having 1-12 carbon atoms.

27. The method of claim 26 wherein R₄ is methyl or lauryl.

28. The method of claim 24 to 27 wherein q is 2 to 20.

29. The method of claim 24 wherein the compound of Formula IV is selected from the group consisting of polyethylene glycol, polypropylene glycol, block copolymers of polyethylene glycol and polypropylene glycol and alkyl monoethers thereof.

30. The method of claim 1 to 29 comprising intermittently or continuously adding the homo- or co-poly (ethylene terephthalate) to the ester compound intermediate.

## Patentansprüche

1. Verfahren zur Herstellung einer sulfonierten Polyesterverbindung, die sich zur Verwendung als Soil-Release-Mittel oder Textilschlichte eignet, bei dem man
a) wenigstens eine Verbindung der Formel (I)
XSO₃ - R - (COOY)ₙ (I)
worin
X für ein Kation steht,
R für eine Arylgruppe steht, die gegebenenfalls mit einer Alkylgruppe oder einer Arylgruppe substituiert ist,
Y unter Wasserstoff und einer Alkylgruppe ausgewählt ist, und
n für eine positive ganze Zahl von 1 bis 4 steht,
mit wenigstens einer Verbindung der Formel (II) umsetzt
R₁-(OH)ₘ (II)
worin R₁ ausgewählt ist unter einer Alkylgruppe, einer Cycloalkylgruppe und einer Arylgruppe, die jeweils gegebenenfalls mit einer Alkylgruppe oder einer Arylgruppe substituiert sind, und m für eine positive ganze Zahl steht, wobei man wenigstens eine intermediäre Esterverbindung erhält,
b) die intermediäre Esterverbindung mit einem Homo- oder Copoly(ethylenterephthalat) als einzigem Reaktionspartner umsetzt, wobei man die sulfonierte Polyesterverbindung erhält, und
c) die sulfonierte Polyesterverbindung abzieht.

2. Verfahren nach Anspruch 1, wobei X ausgewählt ist unter Natrium, Lithium, Kalium, NH₄ und Tetrabutylphosphonium.

3. Verfahren nach Anspruch 2, wobei X für Natrium steht.

4. Verfahren nach Anspruch 1 bis 3, wobei R für Phenyl oder Naphthyl steht.

5. Verfahren nach Anspruch 1 bis 4, wobei Y für eine Alkylgruppe, die unter Methyl, Ethyl, Propyl und Butyl ausgewählt ist, oder Wasserstoff steht.

6. Verfahren nach Anspruch 5, wobei Y für Methyl steht.

7. Verfahren nach Anspruch 1 bis 6, wobei n für 2 steht.

8. Verfahren nach Anspruch 1, wobei die Verbindung der Formel (I) ausgewählt ist unter Dimethyl-5-natriosulfoterephthalat, 5-Natriosulfoisophthalsäure, 5-Lithiosulfoisophthalsäure, 3-Natriosulfobenzoesäure, 4-Natriosulfo-2,2-naphthalindicarbonsäure und 4-Natriosulfodiphenyl-4,4'-dicarbonsäure.

9. Verfahren nach Anspruch 1 bis 8, wobei R₁ für eine Alkylgruppe mit 1-8 Kohlenstoffatomen, eine Cycloalkylgruppe mit 5 bis 8 Kohlenstoffatomen oder Phenyl oder Naphthyl steht.

10. Verfahren nach Anspruch 9, wobei R₁ für eine Alkylgruppe steht, die unter Methyl, Ethyl, Propyl und Butyl ausgewählt ist.

11. Verfahren nach Anspruch 1 bis 10, wobei m für 1 bis 4 steht.

12. Verfahren nach Anspruch 11, wobei m für 2 steht.

13. Verfahren nach Anspruch 1 bis 8, wobei die Verbindung der Formel (II) ausgewählt ist unter Ethylenglykol, 1,2-Propylenglykol, 1,3-Propandiol, Neopentylglykol, Glycerol, 1,2-Butylenglykol, 1,4-Butandiol, 2,2-Dimethyl-1,3-propandiol, 1,6-Hexandiol und 1,4-Cyclohexandimethanol.

14. Verfahren nach Anspruch 1 bis 13, wobei man die Umsetzung im Schritt (a) bei einer Temperatur von etwa 130 bis 190 °C durchführt.

15. Verfahren nach Anspruch 14, wobei man die Umsetzung im Schritt (a) außerdem in Gegenwart eines Veresterungs- oder Umesterungskatalysators durchführt.

16. Verfahren nach Anspruch 1 bis 15, wobei man die Umsetzung im Schritt (b) bei einer Temperatur von etwa 180 bis 260 °C durchführt.

17. Verfahren nach Anspruch 1 bis 16, wobei man die Umsetzung außerdem in einem Vakuum von etwa 600 bis 0,5 mmHg (etwa 79993,2 bis 66,66 Pa) durchführt.

18. Verfahren nach Anspruch 1 bis 17, wobei das Homo- oder Copoly(ethylenterephthalat) ein Copolymer von Poly(ethylenterephthalat) mit einem unter Isophthalat, Dietehylenglykol, Propylenglykol, und 1,4-Cyclohexandimethanol ausgewählten Comonomer ist.

19. Verfahren nach Anspruch 1 bis 18, wobei man im Schritt (a) die Verbindungen der Formel (I) und (II) außerdem in Gegenwart wenigstens einer Verbindung der Formel (III) umsetzt
R₂-(COOZ)ₚ (III)
worin R₂ ausgewählt ist unter einer Alkylgruppe und einer Arylgruppe, die gegebenenfalls mit einer Alkylgruppe oder einer Arylgruppe substituiert ist, Z ausgewählt ist unter Wasserstoff und einer Alkylgruppe und p für eine positive ganze Zahl steht.

20. Verfahren nach Anspruch 19, wobei R₂ für eine Alkylgruppe mit 1-12 Kohlenstoffatomen oder Phenyl oder Naphthyl steht.

21. Verfahren nach Anspruch 19 oder 20, wobei Z für eine Alkylgruppe mit 1-4 Kohlenstoffatomen steht.

22. Verfahren nach Anspruch 19 bis 21, wobei p für 1 oder 2 steht.

23. Verfahren nach Anspruch 19, wobei die Verbindung der Formel (III) ausgewählt ist unter Terephthalsäure, Isophthalsäure, Orthophthalsäure, 1,2-Naphthalindicarbonsäure, 1,4-Naphthalindicarbonsäure, 1,5-Naphthalindicarbonsäure, 1,6-Naphthalindicarbonsäure, 1,7-Naphthalindicarbonsäure, 1,8-Naphthalindicarbonsäure, 2,3-Naphthalindicarbonsäure, 2,6-Naphthalindicarbonsäure, 2,7-Naphthalindicarbonsäure und ihren entsprechenden Alkylestern.

24. Verfahren nach Anspruch 1 bis 23, wobei man im Schritt (a) die Verbindungen der Formel (I) und (II) außerdem in Gegenwart wenigstens einer Verbindung der Formel (IV) umsetzt 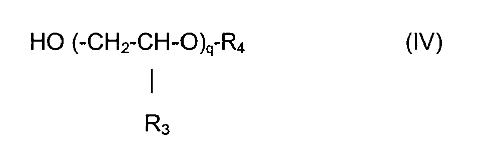 worin R₃ und R₄ unabhängig voneinander unter Wasserstoff und einer Alkylgruppe ausgewählt sind und q für eine positive ganze Zahl steht.

25. Verfahren nach Anspruch 24, wobei R₃ für eine Alkylgruppe mit 1-4 Kohlenstoffatomen steht.

26. Verfahren nach Anspruch 24 oder 25, wobei R₄ für eine Alkylgruppe mit 1-12 Kohlenstoffatomen steht.

27. Verfahren nach Anspruch 26, wobei R₄ für Methyl oder Lauryl steht.

28. Verfahren nach Anspruch 24 bis 27, wobei q für 2 bis 20 steht.

29. Verfahren nach Anspruch 24, wobei die Verbindung der Formel (IV) ausgewählt ist unter Polyethylenglykol, Polypropylenglykol, Blockcopolymeren von Polyethylenglykol und Polypropylenglykol und ihren Alkylmonoethern.

30. Verfahren nach Anspruch 1 bis 29, wobei man das Homo- oder Copoly(ethylenterephthalat) periodisch oder kontinuierlich zu der intermediären Esterverbindung gibt.

## Revendications

1. Procédé de production d'un composé de polyester sulfoné adapté pour être utilisé comme agent anti-salissure ou agent d'encollage textile comprenant :
a) la réaction d'au moins un composé de formule (I)
XSO₃-R-(COOY)ₙ (I)
dans laquelle X est un cation,
R est un groupe aryle qui peut être substitué par un groupe alkyle ou un groupe aryle,
Y est choisi dans le groupe constitué par un atome d'hydrogène et un groupe alkyle, et
n est un entier positif de 1 à 4
avec au moins un composé de formule (II)
R₁-(OH)ₘ (II)
dans laquelle R₁ est choisi dans le groupe constitué par un groupe alkyle, un groupe cycloalkyle et un groupe aryle, lesquels groupes peuvent être substitués par un groupe alkyle ou un groupe aryle, et m est un entier positif, pour produire au moins un intermédiaire de composé ester ;
b) la réaction de l'intermédiaire de composé ester avec un homo- ou co-poly(éthylène téréphtalate) en tant que réactif unique pour produire le composé de polyester sulfoné ; et
c) la décharge dudit composé de polyester sulfoné.

2. Procédé selon la revendication 1, dans lequel X est choisi dans le groupe constitué par un atome de sodium, de lithium, de potassium, de NH₄ et de tétrabutylphosphonium.

3. Procédé selon la revendication 2, dans lequel X est un atome de sodium.

4. Procédé selon la revendication 1 à 3, dans lequel R est un groupe phényle ou naphtyle.

5. Procédé selon la revendication 1 à 4, dans lequel Y est un groupe alkyle choisi dans le groupe constitué par un groupe méthyle, éthyle, propyle et butyle, ou Y est un atome d'hydrogène.

6. Procédé selon la revendication 5, dans lequel Y est un groupe méthyle.

7. Procédé selon la revendication 1 à 6, dans lequel n vaut 2.

8. Procédé selon la revendication 1, dans lequel le composé de formule (I) est choisi dans le groupe constitué par le diméthyl-5-sodiosulfotéréphtalate, l'acide 5-sodiosulfoisophtalique, l'acide 5-lithiosulfoisophtalique , l'acide 3-sodiosulfobenzoïque, l'acide 4-sodiosulfo-2,2-naphtalènedicarboxylique et l'acide 4-sodiosulfodiphényl-4,4'-dicarboxylique.

9. Procédé selon la revendication 1 à 8, dans lequel R₁ est un groupe alkyle ayant 1 à 8 atomes de carbone, un groupe cycloalkyle ayant 5 à 8 atomes de carbone ou un groupe phényle ou naphtyle.

10. Procédé selon la revendication 9, dans lequel R₁ est un groupe alkyle choisi dans le groupe constitué par les groupes méthyle, éthyle, propyle et butyle.

11. Procédé selon la revendication 1 à 10, dans lequel m vaut de 1 à 4.

12. Procédé selon la revendication 11, dans lequel m vaut 2.

13. Procédé selon la revendication 1 à 8, dans lequel le composé de formule (II) est choisi dans le groupe constitué par l'éthylène glycol, le 1,2-propylène glycol, le 1,3-propanediol, le néopentyl glycol, le glycérol, le 1,2-butylène glycol, le 1,4-butanediol, le 2,2-diméthyl-1, le 3-propanediol, le 1,6-hexanediol et le 1,4-cyclohexanediméthanol.

14. Procédé selon la revendication 1 à 13, dans lequel la réaction de l'étape (a) est réalisée à une température d'environ 130 à 190°C.

15. Procédé selon la revendication 14, comprenant en outre la réalisation de la réaction de l'étape (a) en présence d'un catalyseur d'estérification ou de transestérification.

16. Procédé selon la revendication 1 à 15, dans lequel la réaction de l'étape (b) est réalisée à une température d'environ 180 à 260°C.

17. Procédé selon la revendication 1 à 16, comprenant en outre la réalisation de la réaction sous un vide d'environ 600 à 0,5 mmHg (d'environ 79993,2 à 66,66 Pa).

18. Procédé selon la revendication 1 à 17, dans lequel l'homo- ou co-poly(éthylène téréphtalate) est un copolymère de poly(éthylène téréphtalate) avec un comonomère choisi dans le groupe constitué par l'isophtalate, le diéthylène glycol, le propylène glycol et le 1,4-cyclohexanediméthanol.

19. Procédé selon la revendication 1 à 18, dans lequel l'étape (a) comprend en outre la réaction des composés des formules (I) et (II) en présence d'au moins un composé de formule (III)
R₂-(COOZ)ₚ (III)
dans laquelle R₂ est choisi dans le groupe constitué par un groupe alkyle et un groupe aryle qui peut être substitué par un groupe alkyle ou un groupe aryle, Z est choisi dans le groupe constitué par un atome d'hydrogène et un groupe alkyle et p est un entier positif.

20. Procédé selon la revendication 19, dans lequel R₂ est un groupe alkyle ayant 1 à 12 atomes de carbone ou un groupe phényle ou naphtyle.

21. Procédé selon la revendication 19 ou 20, dans lequel Z est un groupe alkyle ayant 1 à 4 atomes de carbone.

22. Procédé selon la revendication 19 à 21, dans lequel p vaut 1 ou 2.

23. Procédé selon la revendication 19, dans lequel le composé de formule (III) est choisi dans le groupe constitué par les acides téréphtalique, isophtalique, orthophtalique, 1,2-naphtalènedicarboxylique, 1,4-naphtalènedicarboxylique, 1,5-naphtalènedicarboxylique, 1,6-naphtalènedicarboxylique, 1,7-naphtalènedicarboxylique, 1,8-naphtalènedicarboxylique, 2,3-naphtalènedicarboxylique, 2,6-naphtalènedicarboxylique, 2,7-naphtalènedicarboxylique et leurs esters d'alkyle correspondants.

24. Procédé selon la revendication 1 à 23, dans lequel l'étape (a) comprend en outre la réaction des composés de formule (I) et (II) en présence d'au moins un composé de formule (IV) 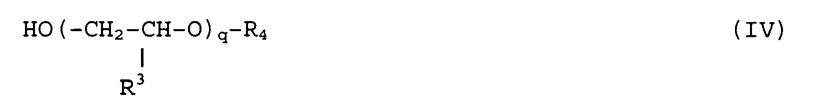 dans laquelle R₃ et R₄ sont chacun indépendamment choisis dans le groupe constitué par un atome d'hydrogène et un groupe alkyle et q est un entier positif.

25. Procédé selon la revendication 24, dans lequel R₃ est un groupe alkyle ayant 1 à 4 atomes de carbone.

26. Procédé selon la revendication 24 ou 25, dans lequel R₄ est un groupe alkyle ayant 1 à 12 atomes de carbone.

27. Procédé selon la revendication 26, dans lequel R₄ est un groupe méthyle ou lauryle.

28. Procédé selon la revendication 24 à 27, dans lequel q vaut 2 à 20.

29. Procédé selon la revendication 24, dans lequel le composé de formule IV est choisi dans le groupe constitué par le polyéthylène glycol, le polypropylène glycol, les copolymères séquencés de polyéthylène glycol et de polypropylène glycol, et les monoéthers d'alkyle de ceux-ci.

30. Procédé selon la revendication 1 à 29, comprenant l'addition intermittente ou continue de l'homo- ou du co-poly(éthylène téréphtalate) à l'intermédiaire de composé ester.
